# EUROPÄISCHE PATENTSCHRIFT

(11) **EP 3 825 175 B1**
(45) Veröffentlichungstag und Bekanntmachung des Hinweises auf die Patenterteilung: **12.01.2022**
(21) Anmeldenummer: 20203403.9
(22) Anmeldetag: 22.10.2020
(51) Int. Cl.: B60N 2/38, B60N 2/50, B60N 2/39

(54) **FAHRZEUGSITZ**
VEHICLE SEAT
SIÈGE DE VÉHICULE

(30) Priorität: 22.11.2019 DE 102019131595
(43) Veröffentlichungstag der Anmeldung: 26.05.2021
(73) Patentinhaber: GRAMMER AG, 92289 Ursensollen (DE)
(72) Erfinder: Haller, Erwin, 92262 Birgland (DE)
(74) Vertreter: Hannke, Christian

(56) Entgegenhaltungen:
- EP-A1- 3 181 397
- EP-A1- 3 505 393

## Beschreibung

Die Erfindung betrifft einen Fahrzeugsitz mit einem Rückenlehnenteil und einem Rückenlehnenbasisteil, einem Sitzteil und einem Sitzbasisteil, wobei das Sitzteil gegenüber dem Sitzbasisteil verlagerbar ist und wobei das Rückenlehnenteil drehbar mit dem Rückenlehnenbasisteil verbunden sind.

Gattungsgemäße Fahrzeugsitze für Off-Road-Fahrzeuge, Trucks, MH-Turf etc. beinhalten zur Isolation von Schwingungen standardmäßig Vorrichtungen, welche die schädigenden Einflüsse vom Fahrer fernhalten bzw. reduzieren. Diese stellen insbesondere Schwingungen in vertikale und horizontale Richtungen dar. Die Schwingungen werden üblicherweise in translatorisch ausgeführten Freiheitsgraden abgebaut. Die Platzierung der Freiheitsgrade werden in den heute bekannten Systemen zum einen in den Vertikalfederungen umgesetzt, zum anderen als eigene Module in das Gesamtsystem des Fahrzeugsitzes integriert.

Die sechs fahrdynamischen Freiheitsgrade von Arbeitsmaschinen führen im Arbeitseinsatz zu Bewegungen des Fahrzeuges, welche sich auf den Fahrer unangenehm und schädigend auswirken können. Hierzu zählen Verschiebungen in Richtung der Längsachse, der Breitenachse oder der Höhenachse des Fahrzeugs.

Ebenfalls sind Rotationsbewegungen um die Längsachse x (Rollbewegung), um die Breitenachse (Nickbewegung) oder um die Höhenachse (Gierbewegung) des Fahrzeugs möglich. Ein nickendes Fahrzeug führt also eine Rotationsbewegung um die Breitenachse des Fahrzeugs durch, welche beispielsweise beim Überfahren eines Hindernisses in Fahrtrichtung nach vorne entlang der Längsachse ausgelöst wird.

Nachteil der bekannten Systeme ist jedoch, dass die Federungssysteme für die Rückenlehne und das Sitzteil oft separat arbeiten. Dadurch ist kein ganzheitlicher Schwingungsabbau möglich.

Generell gilt, dass Schwingungen dann am besten abgebaut werden, wenn die Bewegung, die beim Einleiten der Schwingung induziert wird, hinsichtlich ihrer Richtung zur Bewegungsrichtung, die der Schwingung innewohnt, genau entgegen gerichtet ausgebildet ist. Sofern die Richtung bzw. der Vektor davon abweicht, werden auch "unnötige" Bewegungsanteile induziert, deren Richtung so ausgebildet ist, dass sie zum Abbau der Schwingungen nicht beitragen können. Die EP 3505393 zeigt einen Fahrzeugsitz mit einem Rückenlehnenteil und einem Rückenlehnenbasisteil, einem Sitzteil und einem Sitzbasisteil, wobei das Sitzteil gegenüber dem Sitzbasisteil verlagerbar ist.

Es ist daher Aufgabe vorliegender Erfindung, einen gattungsgemäßen Fahrzeugsitz so weiterzuentwickeln, dass die Schwingungen möglichst effektiv abgebaut werden, wobei der Fahrzeugsitz konstruktiv einfacher als im Stand der Technik dargestellt ausgebildet ist.

Die zugrundeliegende Aufgabe der vorliegenden Anmeldung wird durch einen Fahrzeugsitz mit den Merkmalen des Patentanspruches 1 gelöst.

Kerngedanke der vorliegenden Erfindung ist es, einen Fahrzeugsitz mit einem Rückenlehnenteil und einem Rückenlehnenbasisteil, einem Sitzteil und einem Sitzbasisteil, bereitzustellen, wobei das Sitzteil gegenüber dem Sitzbasisteil verlagerbar ist und wobei das Rückenlehnenteil drehbar mit dem Rückenlehnenbasisteil verbunden sind, wobei das Rückenlehnenbasisteil und das Sitzbasisteil mittels einer Hebelanordnung miteinander verbunden sind, wobei die Hebelanordnung ein erstes Hebelelement aufweist, welches mit der Rückenlehne und dem Sitzbasisteil drehbar verbunden ist, und ein zweites Hebelelement aufweist, welches ein erstes Hebelelementteil und ein zweites Hebelelementteil umfasst, wobei das erste Hebelelementteil mit der Rückenlehne und dem zweiten Hebelelementteil drehbar verbunden ist und das zweite Hebelelementteil mit dem ersten Hebelelementteil und einer Einstelleinrichtung drehbar verbunden ist, wobei die Einstelleinrichtung drehbar mit dem Sitzbasisteil verbunden ist.

Besonders vorteilhaft ist mittels der Hebelanordnung das Rückenlehnenbasisteil und das Sitzbasisteil federnd gelagert angeordnet, das heißt insbesondere, dass das Rückenlehnenteil und das Sitzteil federnd gelagert angeordnet sind.

Gemäß einer besonders bevorzugten Ausführungsform ist das erste Hebelelement drehbar um eine erste Drehachse mit der Rückenlehne und drehbar um eine zweite Drehachse mit dem Sitzbasisteil verbunden, und wobei das erste Hebelelementteil drehbar um eine dritte Drehachse mit der Rückenlehne und drehbar um eine vierte Drehachse mit dem zweiten Hebelelementteil verbunden ist, und wobei das zweite Hebelelementteil drehbar um eine fünfte Drehachse mit der Einstelleinrichtung verbunden ist, wobei die Einstelleinrichtung drehbar um eine sechste Drehachse mit dem Sitzbasisteil verbunden ist.

Die Drehachsen sind insbesondere unabhängig voneinander ausgebildet. Die Drehachsen können durch einen Stift, eine Welle oder dergleichen ausgebildet sein.

Erfindungsgemäß ist es vorgesehen, dass mittels der Einstelleinrichtung, welche einerseits drehbar um die sechste Drehachse mit dem Sitzbasisteil und andererseits drehbar um die fünfte Drehachse mit dem zweiten Hebelelementteil verbunden ist, eine Drehung des zweiten Hebelelementteils bei einer Drehung der Einstelleinrichtung erfolgt. Die Position der sechsten Drehachse ist bei Drehung der Einstelleinrichtung ortsfest gegenüber dem Sitzbasisteil, wohingegen die Position der fünften Drehachse sich mit einer Drehung der Einstelleinrichtung um die sechste Drehachse verändert wird, nämlich dass die fünfte Drehachse um die sechste Drehachse gedreht wird.

Gemäß einer bevorzugten Ausführungsform ist die sechste Drehachse ortsfest gegenüber dem Sitzbasisteil angeordnet, und wobei die zweite Drehachse ortsfest gegenüber dem Sitzbasisteil angeordnet ist, und wobei die erste Drehachse ortsfest gegenüber dem Rückenlehnenbasisteil angeordnet ist, und wobei die dritte Drehachse ortsfest gegenüber dem Rückenlehnenbasisteil angeordnet ist.

Ortsfest ist dabei derart zu verstehen, dass die strukturelle Ausgestaltung sich nicht relativ zu dem jeweiligen Bauteil bewegt, bis auf Drehung.

Besonders bevorzugt sind dabei die vierte Drehachse und die fünfte Drehachse nicht ortsfest angeordnet; die vierte Drehachse, welche das erste Hebelelementteil und das zweite Hebelelementteil miteinander drehbar verbindet, sowie die fünfte Drehachse, welche sich um die sechste Drehachse dreht bei Betätigung der Einstelleinrichtung, sind nicht ortsfest hinsichtlich eines Bauteils ausgebildet. Insbesondere gilt dies bei einer Bewegung des Rückenlehnenbasisteils gegenüber dem Sitzbasisteil mittels der Hebelanordnung.

Gemäß einer bevorzugten Ausführungsform sind eine erste Verbindungslinie zwischen der ersten Drehachse zu der zweiten Drehachse, eine zweite Verbindungslinie zwischen der dritten Drehachse zu der vierten Drehachse und eine dritte Verbindungslinie zwischen der fünften Drehachse und der sechsten Drehachse ausgebildet.

Mittels dieser Verbindungslinien kann eine Bewegung, beziehungsweise eine Einstellung mittels oder aufgrund der Einstelleinrichtung oder bei einer Relativbewegung des Rückenlehnenbasisteils zu dem Sitzbasisteil genauer beschrieben werden.

Gemäß einer weiteren bevorzugten Ausführungsform ist das Sitzteil einerseits mit dem Rückenlehnenbasisteil drehbar, insbesondere um eine siebte Drehachse verbunden, wobei andererseits ein drittes Hebelelementteil vorgesehen ist, welches mit dem Sitzteil drehbar, insbesondere um eine achte Drehachse, und dem Sitzbasisteil drehbar, insbesondere um eine neunte Drehachse verbunden ist.

Besonders vorteilhaft ist das dritte Hebelelementteil in einem vorderen Bereich des Sitzteils bzw. des Sitzbasisteils angeordnet, in Längsrichtung gesehen.

Durch eine derartige Anordnung kann das Sitzteil der Bewegung des Rückenlehnenbasisteils nachfolgen, wodurch eine Verlagerung des Sitzteils in Längsrichtung gesehen nach hinten und vorne ermöglicht ist. Eine Verlagerung ist dabei eine translatorische Verlagerung und gegebenenfalls zusätzlich eine rotatorische Verlagerung, das heißt, eine Bewegung, welcher der Nickbewegung des Fahrzeugs nachfolgt.

Gemäß einer weiteren bevorzugten Ausführungsform entspricht ein erster Abstand der ersten Drehachse zu der zweiten Drehachse gleich einem Abstand der dritten Drehachse zu der vierten Drehachse.

Das heißt, dass durch die Ausgestaltung des ersten Hebelelements und des zweiten Hebelelements die Länge des zweiten Hebelelements stets größer ist als die des ersten Hebelelements, genauer gesagt ist die Länge zwischen der dritten Drehachse und der fünften Drehachse größer als der Abstand zwischen der ersten Drehachse und der zweiten Drehachse.

Gemäß einer besonders bevorzugten Ausführungsform sind mittels der Einstelleinrichtung eine erste Position, eine zweite Position und eine dritte Position des zweiten Hebelelementteils einstellbar, wobei in der ersten Position die erste Verbindungslinie parallel zu der zweiten Verbindungslinie ist, und in der zweiten Position die erste Verbindungslinie und die zweite Verbindungslinie einen ersten Winkel einschließen, und in der dritten Position die erste Verbindungslinie und die zweite Verbindungslinie einen zweiten Winkel einschließen.

Sind dabei die erste Verbindungslinie und die zweite Verbindungslinie parallel zueinander angeordnet, also in der ersten Position, so bedeutet dies, dass sich das Rückenlehnenbasisteil gegenüber dem Sitzbasisteil translatorisch bewegt. Weiter bevorzugt ist das dritte Hebelelement derart ausgebildet, dass das dritte Hebelelement parallel zu dem ersten Hebelelement ist, unabhängig von der Stellung des zweiten Hebelelements. Dies bedeutet, dass das Sitzteil ebenso translatorisch bewegt wird.

In der zweiten Position, also wenn die erste Verbindungslinie und die zweite Verbindungslinie einen ersten Winkel einschließen, ist dies gleichbedeutend mit einer Drehung des Rückenlehnenbasisteils um einen fiktiven Drehpunkt, welcher bevorzugt unterhalb des Sitzbasisteils angeordnet ist, in der Höhenrichtung gesehen.

In der dritten Position, also wenn die erste Verbindungslinie und die zweite Verbindungslinie einen zweiten Winkel einschließen, ist dies gleichbedeutend mit einer Drehung des Rückenlehnenbasisteils um einen fiktiven Drehpunkt, welcher bevorzugt unterhalb des Sitzbasisteils angeordnet ist, in der Höhenrichtung gesehen, und welcher gegenüber dem fiktiven Drehpunkt der zweiten Position in Höhenrichtung verschoben ist.

Besonders bevorzugt ist der erste Winkel kleiner als der zweite Winkel. Besonders bevorzugt ist der erste Winkel kleiner als 10°, bevorzugter kleiner als 7°. Der zweite Winkel ist kleiner als 20°, bevorzugter kleiner als 15° und besonders bevorzugt kleiner als 13°.

Gemäß einer weiteren bevorzugten Ausführungsform ist es vorgesehen, dass die zweite Verbindungslinie und die dritte Verbindungslinie in der ersten Position einen dritten Winkel einschließen, in der zweiten Position einen vierten Winkel einschließen und in der dritten Position einen fünften Winkel einschließen.

Durch die Angabe des Winkels zwischen dem ersten Hebelelementteil und dem zweiten Hebelelementteil wird die Stellung des ersten Hebelelementteils zu dem zweiten Hebelelementteil beschrieben.

In der ersten Position, das heißt, wenn die erste Verbindungslinie parallel zu der zweiten Verbindungslinie ist, schließen die zweite Verbindungslinie und die dritte Verbindungslinie einen dritten Winkel ein. Besonders bevorzugt beträgt dieser dritte Winkel mindestens 150°, bevorzugter mindestens 140° und besonders bevorzugt 130° oder mehr als 130°.

In der zweiten Position, das heißt, wenn die erste Verbindungslinie und die zweite Verbindungslinie den ersten Winkel einschließen, schließen die zweite Verbindungslinie und die dritte Verbindungslinie einen vierten Winkel ein. Besonders bevorzugt beträgt der vierte Winkel 180°.

In der dritten Position, das heißt, wenn die erste Verbindungslinie und die zweite Verbindungslinie den zweiten Winkel einschließen, schließen die zweite Verbindungslinie und die dritte Verbindungslinie einen fünften Winkel ein. Besonders bevorzugt beträgt der Winkel mindestens 30°, bevorzugten mindestens 40° und besonders bevorzugt 50° oder mehr als 50°.

Gemäß einer besonders bevorzugten Ausführungsform ist es vorgesehen, dass mittels der Einstelleinrichtung ein dritter Abstand der dritten Drehachse zu der fünften Drehachse veränderbar ist, so dass eine Position einer fiktiven Rotationsachse veränderbar ist.

Dies bedeutet, dass in Bezug auf den Abstand zwischen der ersten Drehachse und der zweiten Drehachse die Länge des zweiten Hebelelements als auch die Lage des zweiten Hebelelementteils relativ zu dem ersten Hebelelement verändert werden kann, wodurch eine translatorische oder eine translatorische und rotatorische Bewegung des Rückenlehnenbasisteils zu dem Sitzbasisteil eingestellt werden kann, je nach Bedarf.

Gemäß einer weiteren bevorzugten Ausführungsform ist es vorgesehen, dass bei einer Bewegung des Rückenlehnenbasisteils gegenüber dem Sitzbasisteil mittels der Hebelanordnung eine Sitzteilneigung des Sitzteils und eine Längsposition relativ zu dem Sitzbasisteil einstellbar ist.

Insbesondere bei einer rotativen Bewegung des Rückenlehnenbasisteils gegenüber dem Sitzbasisteil ist dies von Vorteil, das heißt, wenn die Hebelanordnung in der zweiten Position oder der dritten Position eingestellt ist. Bei einer translatorischen Bewegung des Rückenlehnenbasisteils gegenüber dem Sitzbasisteil ist eine Anpassung der Bewegung des Rückenlehnenbasisteils gegenüber dem Sitzbasisteil nicht notwendig.

Insbesondere wird durch die Einstellung mittels der Einstelleinrichtung die Sitzneigung des Sitzteils vorgegeben, welche sich insbesondere während einer Relativbewegung des Rückenlehnenbasisteils gegenüber dem Sitzbasisteil weiter verändert.

Gemäß einer weiteren bevorzugten Ausführungsform ist es vorgesehen, dass die Einstelleinrichtung ausgebildet ist, in verschiedenen Positionen arretiert zu werden. Eine Arretierung ist beispielsweise derart vorgesehen, so dass die erste Position, die zweite Position und die dritte Position arretierbar sind.

Weitere vorteilhafte Ausführungsformen ergeben sich auf den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1: Nutzfahrzeug mit unterschiedlichen Drehmöglichkeiten;
- Fig. 2A: Hebelanordnung in einer ersten Position;
- Fig. 2B: Hebelanordnung in einer zweiten Position;
- Fig. 2C: Hebelanordnung in einer dritten Position;
- Fig. 3A: Fahrzeugsitz mit Hebelanordnung in der ersten Position in einer nach vorne verlagerten Stellung;
- Fig. 3B: Fahrzeugsitz mit Hebelanordnung in der ersten Position in einer neutralen Stellung;
- Fig. 3C: Fahrzeugsitz mit Hebelanordnung in der ersten Position in einer nach hinten verlagerten Stellung;
- Fig. 3D: Vergleich zwischen den Figuren 3A-3C;
- Fig. 4A: Fahrzeugsitz mit Hebelanordnung in der zweiten Position in einer nach vorne verlagerten Stellung;
- Fig. 4B: Fahrzeugsitz mit Hebelanordnung in der zweiten Position in einer neutralen Stellung;
- Fig. 4C: Fahrzeugsitz mit Hebelanordnung in der zweiten Position in einer nach hinten verlagerten Stellung;
- Fig. 4D: Vergleich zwischen den Figuren 4A-4C;
- Fig. 5A: Fahrzeugsitz mit Hebelanordnung in der dritten Position in einer nach vorne verlagerten Stellung;
- Fig. 5B: Fahrzeugsitz mit Hebelanordnung in der dritten Position in einer neutralen Stellung;
- Fig. 5C: Fahrzeugsitz mit Hebelanordnung in der dritten Position in einer nach hinten verlagerten Stellung;
- Fig. 5D: Vergleich zwischen den Figuren 5A-5C;
- Fig. 6: Fahrzeugsitz in einer perspektivischen Ansicht;
- Fig. 7: detailliertere Darstellung des Fahrzeugsitzes der Figur 6;
- Fig. 8: Explosionsdarstellung der Figur 7;
- Fig. 9A: zweites Hebelelementteil in einer Draufsicht;
- Fig. 9B: Schnitt F-F aus der Figur 9A;
- Fig. 9C: Schnitt E-E aus der Figur 9A.

In den Figuren sind gleiche Bauteile mit gleichen Bezugszeichen versehen. Aus Gründen der Übersichtlichkeit kann es sein, dass manche Bezugszeichen weggelassen worden sind.

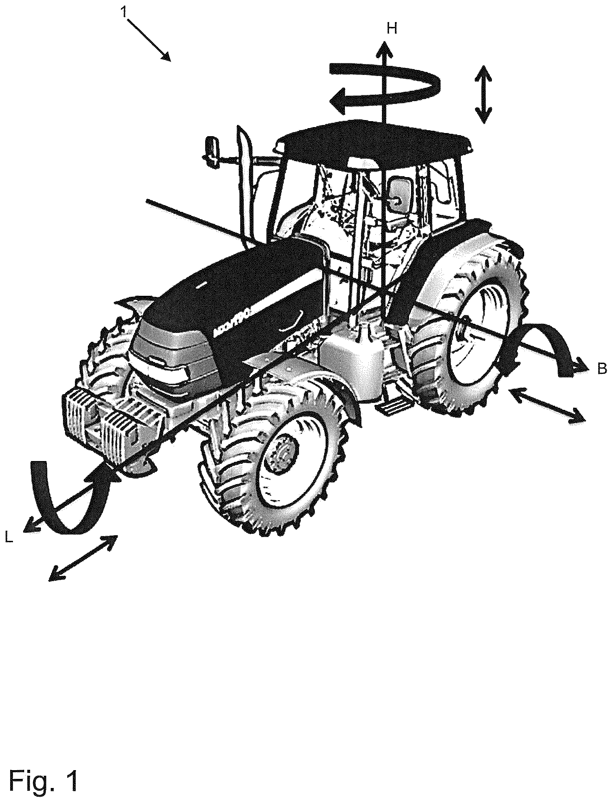

Das in der Figur 1 gezeigte Nutzfahrzeug 1 zeigt die typischen Bewegungen des Nutzfahrzeuges an, abhängig natürlich von der jeweiligen Fahrsituation. Es können hierbei Translationen des Nutzfahrzeugs entlang einer Längsrichtung L, einer Breitenrichtung B und einer Höhenrichtung H auftreten. Weiter können jeweils um diese Achsen L, B, H Rotationen auftreten, wobei eine Rotation um die Längsrichtung L als Rollen R, eine Rotation um die Breitenrichtung B als Nicken N und eine Rotation um die Höhenrichtung H als Gieren G bekannt sind. Typischerweise wird Gieren für die Fahrzeuge vernachlässigt.

Erfindungsgemäß ist es möglich, die Bewegungen "Nicken" und "Translation in Längsrichtung" mittels des Fahrzeugsitzes abzufedern.

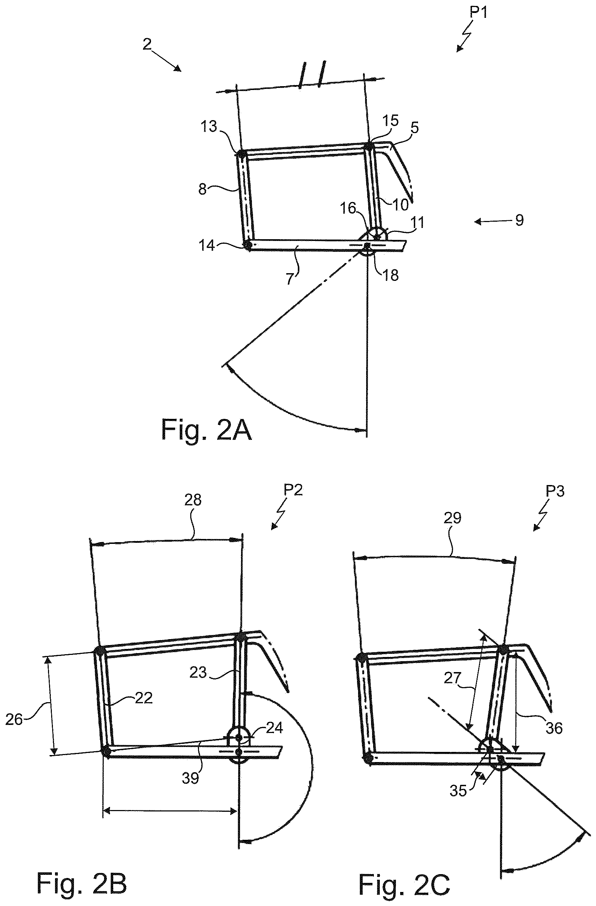

Die drei grundsätzlich verschiedenen Stellungen einer Hebelanordnung 2 eines Fahrzeugsitzes 3 (hier nicht dargestellt) sind durch die Figuren 2A, 2B und 2C gezeigt. Die Figuren können hierbei verschiedene Maßstäbe aufweisen. Diese Stellungen werden eingenommen, wenn keine Schwingung eines Rückenlehnenbasisteils 5 gegenüber einem Sitzbasisteil 7 durchgeführt wird, also keine äußere Störung oder dergleichen auftritt.

Die Hebelanordnung 2 ist dabei einerseits mit dem Rückenlehnenbasisteil 5 als auch mit dem Sitzbasisteil 7 verbunden und umfasst bevorzugt ein erstes Hebelelement 8 und ein zweites Hebelelement 9, wobei das zweite Hebelelement 9 aus einem ersten Hebelelementteil 10 und einem zweiten Hebelelementteil 11 besteht.

Weiter ist das erste Hebelelementteil 8 drehbar um eine erste Drehachse 13 mit dem Rückenlehnenbasisteil 5 und drehbar um eine zweite Drehachse 14 mit dem Sitzbasisteil 7 verbunden.

Das erste Hebelelementteil 10 ist drehbar um eine dritte Drehachse 15 mit dem Rückenlehnenbasisteil 5 und drehbar um eine vierte Drehachse 16 mit dem zweiten Hebelelementteil 11 verbunden, wobei das zweite Hebelelementteil 11 drehbar um eine fünfte Drehachse 17 mit der Einstelleinrichtung 12 (hier nicht gezeigt), welche drehbar um eine sechste Drehachse 18 ist, verbunden ist.

Es ist darauf hingewiesen, dass die jeweiligen Elemente der Figuren 2A, 2B und 2C lediglich schematische Darstellungen sind.

In den Figuren 2A, 2B und 2C ist die Hebelanordnung 2 jeweils in einer neutralen Stellung N dargestellt, das heißt, dass keine Kraft auf den Fahrzeugsitz 3 einwirkt, welche eine Relativbewegung des Rückenlehnenbasisteils 5 zu dem Sitzbasisteil 7 hervorrufen würde.

Besonders bevorzugt ist ein zweiter Abstand 27 der dritten Drehachse 15 zu der vierten Drehachse 16 länger als ein dritter Abstand 35 der vierten Drehachse 16 zu der sechsten Drehachse 18.

Weiter bevorzugt ist der zweite Abstand 27 der dritten Drehachse 15 zu der vierten Drehachse 16 gleich einem ersten Abstand 26 der ersten Drehachse 13 zu der zweiten Drehachse 14.

Insgesamt ist das zweite Hebelelement 9 derart ausgebildet, dass ein vierter Abstand 36 der dritten Drehachse 15 zu der sechsten Drehachse 18 variabel und einstellbar ist.

Darüber hinaus ist es bevorzugt vorgesehen, dass ein fünfter Abstand 37 der ersten Drehachse 13 zu der dritten Drehachse 15 größer ist als ein sechster Abstand 38 der zweiten Drehachse 14 zu der sechsten Drehachse 18.

Durch diese Ausgestaltung des zweiten Hebelelements 9 kann eine Sitzneigung des Sitzteils 6 eingestellt werden. Dies kann einem Vergleich der Figuren 2A, 2B und 2C miteinander erkannt werden.

Die Figur 2A zeigt die Hebelanordnung 2 in einer ersten Position P1, das heißt, dass das erste Hebelelement 8 und das erste Hebelelementteil 10 parallel zueinander angeordnet sind. Das heißt, dass eine Bewegung des Rückenlehnenbasisteils 5 gegenüber dem Sitzbasisteil 7 eine translatorische Bewegung darstellt. Parallel heißt hierbei, dass eine erste Verbindungslinie 22 zwischen der ersten Drehachse 13 und der zweiten Drehachse 14 parallel zu einer zweiten Verbindungslinie 23 zwischen der dritten Drehachse 15 zu der vierten Drehachse 16 ist.

Die Figur 2B zeigt die Hebelanordnung 2 in einer zweiten Position P2, das heißt, dass das erste Hebelelement 8 und das erste Hebelelementteil 10 nicht mehr parallel zueinander angeordnet sind, sondern einen ersten Winkel 28 einschließen. In der Position P2 sind die zweite Verbindungslinie 23 und eine dritte Verbindungslinie 24 zwischen der vierten Drehachse 16 und der sechsten Drehachse 18 fluchtend zueinander angeordnet.

Die Figur 2C zeigt die Hebelanordnung 2 in einer dritten Position P3, das heißt, dass das erste Hebelelement 8 und das erste Hebelelementteil 10 nicht mehr parallel zueinander angeordnet sind, sondern einen zweiten Winkel 29 einschließen.

Insbesondere ist die Drehrichtung von der ersten Position P1 zu der zweiten Position P2 und der dritten Position P3 derart, dass sich ein siebter Abstand 39 zwischen der zweiten Drehachse 14 und der vierten Drehachse 16 verkleinert. Hierdurch wird der Winkel zwischen dem ersten Hebelelement 8 und dem ersten Hebelelementteil 10 verändert, wodurch verschiedene Bewegungen des Rückenlehenbasisteils 5 gegenüber dem Sitzbasisteil 7 ermöglicht werden.

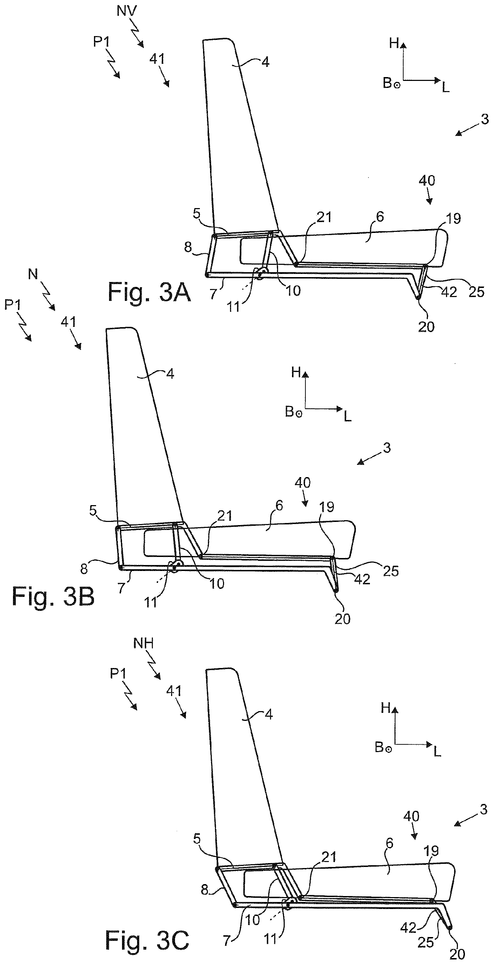

In den Figuren 3A, 3B und 3C ist der Fahrzeugsitz 3 in einer schematischen Darstellung dargestellt, in einer Bewegung nach vorne NV in Längsrichtung L, in der neutralen Stellung N und in einer Bewegung nach hinten NH, wobei die Hebelanordnung in der ersten Position P1 eingestellt ist.

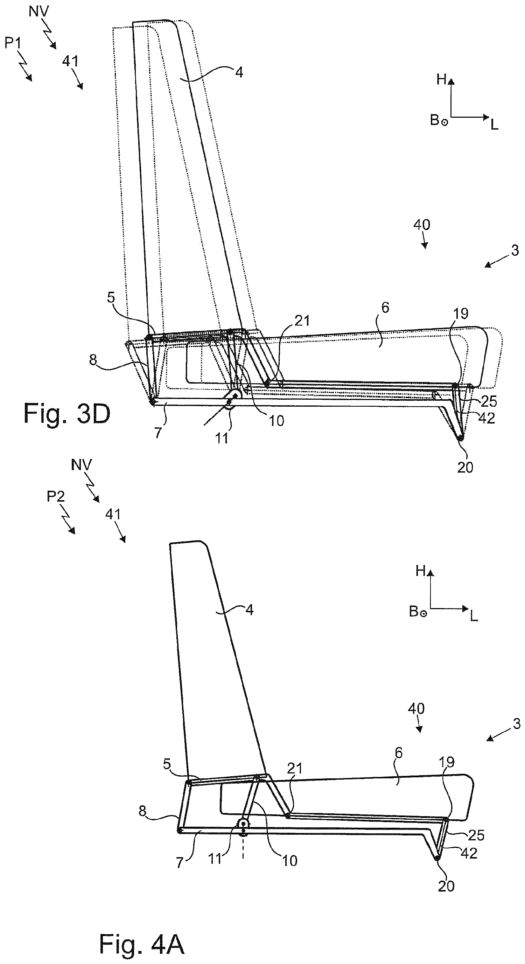

Die Figur 3D zeigt eine Überlagerung der Figuren 3A, 3B und 3C.

Der Fahrzeugsitz 3 umfasst dabei ein Rückenlehnenteil 4, ein Rückenlehnenbasisteil 5, ein Sitzteil 6 und ein Sitzbasisteil 7.

Dabei ist ein drittes Hebelelementteil 25 vorgesehen, welches einerseits drehbar um eine siebte Drehachse 19 mit dem Sitzteil 6 und andererseits drehbar um eine achte Drehachse 8 mit dem Sitzbasisteil 7 verbunden ist. Weiter ist das Sitzteil 6 drehbar um eine neunte Drehachse 21 mit dem Rückenlehnenbasisteil 5 verbunden. Dabei ist das dritte Hebelelementteil 25 derart ausgerichtet, dass es parallel zu dem ersten Hebelelement 8 angeordnet ist, das heißt, dass eine vierte Verbindungslinie 42 zwischen der siebten Drehachse 19 und der achten Drehachse 20 parallel zu der ersten Verbindungslinie 22 ist. Dies ist bevorzugt unabhängig von der Position der Hebelanordnung 2.

Aus dem Vergleich der Figuren 3A, 3B und 3C ist zu erkennen, dass das Rückenlehnenbasisteil 5 und das Sitzteil 6 translatorisch gegenüber dem Sitzbasisteil 7 bewegt werden. Aufgrund der Anordnung und Ausgestaltung der Hebelanordnung 2 ist eine translatorische Bewegung zusammengesetzt aus einer translatorischen Bewegung in Längsrichtung L und in Höhenrichtung H.

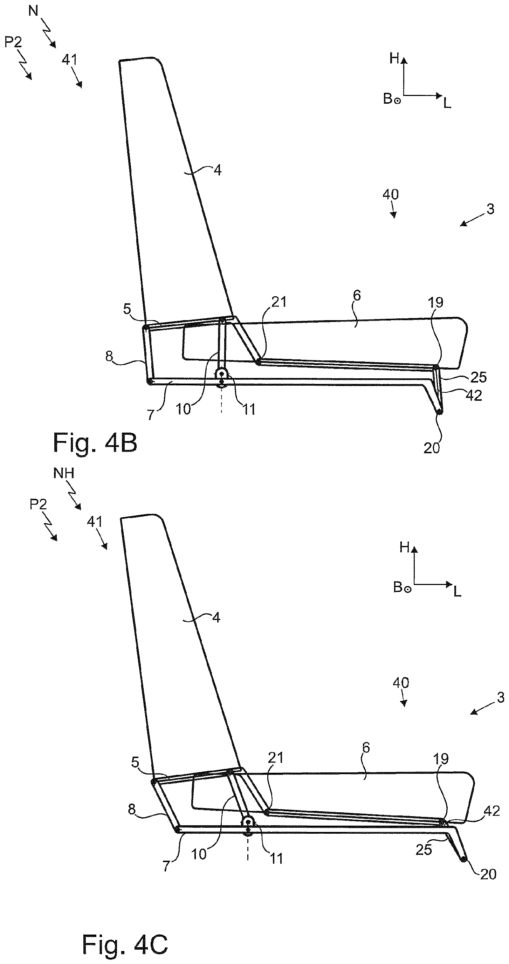

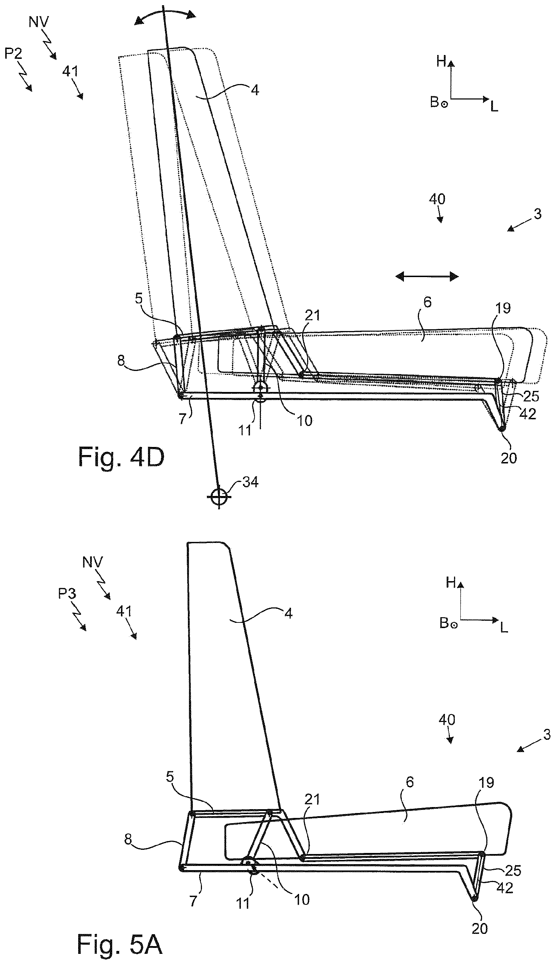

Die Figuren 4A, 4B, 4C und 4D entsprechen den Figuren 3A, 3B, 3C und 3D bis auf die Hebelanordnung 2, welche nun in der zweiten Position P2 ist.

In dem Vergleich der Figuren 4A, 4B und 4C, dargestellt in der Figur 4D, ist zu erkennen, dass das Rückenlehnenbasisteil 5 nun eine Rotationsbewegung um eine fiktive Drehachse 34 aufweist, was ebenso in einer Rotationsbewegung des Sitzteils 6 resultiert. Bei einer Nickbewegung des Fahrzeugs kann der Fahrzeugsitz daher diese Nickbewegung gut abgefedert werden.

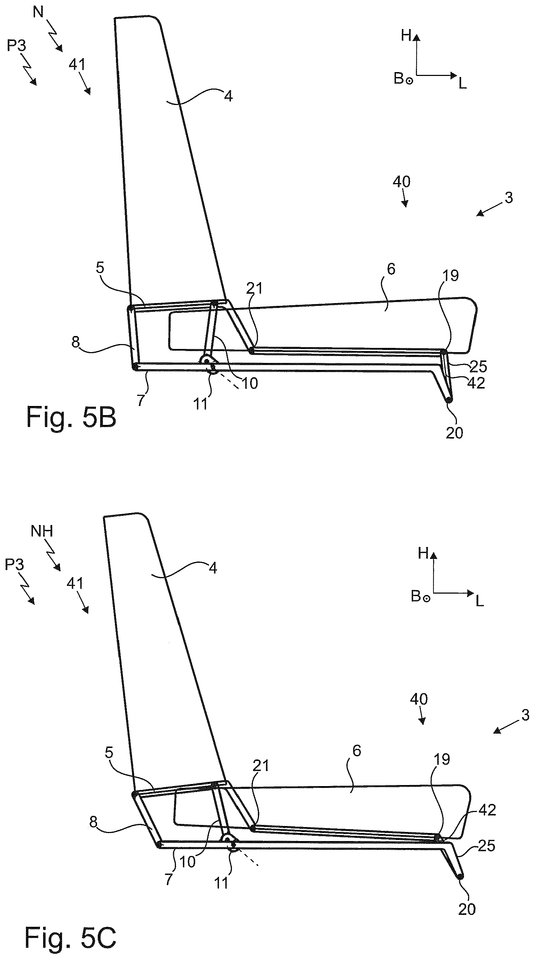

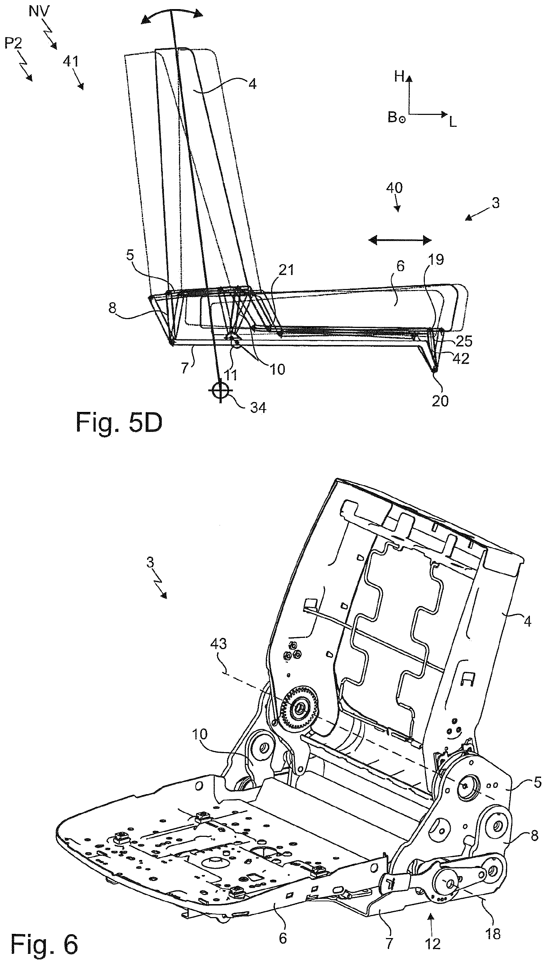

Die Figuren 5A, 5B, 5C und 5D entsprechen den Figuren 3A, 3B, 3C und 3D bis auf die Hebelanordnung 2, welche nun in der dritten Position P3 ist.

In dem Vergleich der Figuren 5A, 5B und 5C, dargestellt in der Figur 5D, ist zu erkennen, dass das Rückenlehnenbasisteil 5 nun eine Rotationsbewegung um eine fiktive Drehachse 34 aufweist, was ebenso in einer Rotationsbewegung des Sitzteils 6 resultiert. Bei einer Nickbewegung des Fahrzeugs kann der Fahrzeugsitz daher diese Nickbewegung gut abfedern. Jedoch ist im Vergleich zu der Figur 4D die fiktive Drehachse 34 in Höhenrichtung H nach oben verschoben, da der Winkel zwischen der ersten Verbindungslinie 22 und der zweiten Verbindungslinie 23 sich vergrößert hat.

In der Figur 6 ist nun der Fahrzeugsitz 3 in einer nicht-schematischen Darstellung gezeigt. Dabei ist ein Rückenlehnenteil 4 zu erkennen, welches mittels einer Dreheinrichtung 44 drehbar um eine zehnte Drehachse 43 drehbar mit dem Rückenlehnenbasisteil 5 verbunden ist.

Auch ist die Einstelleinrichtung 12 erkennbar, welche drehbar um die sechste Drehachse mit dem Sitzbasisteil 7 verbunden ist.

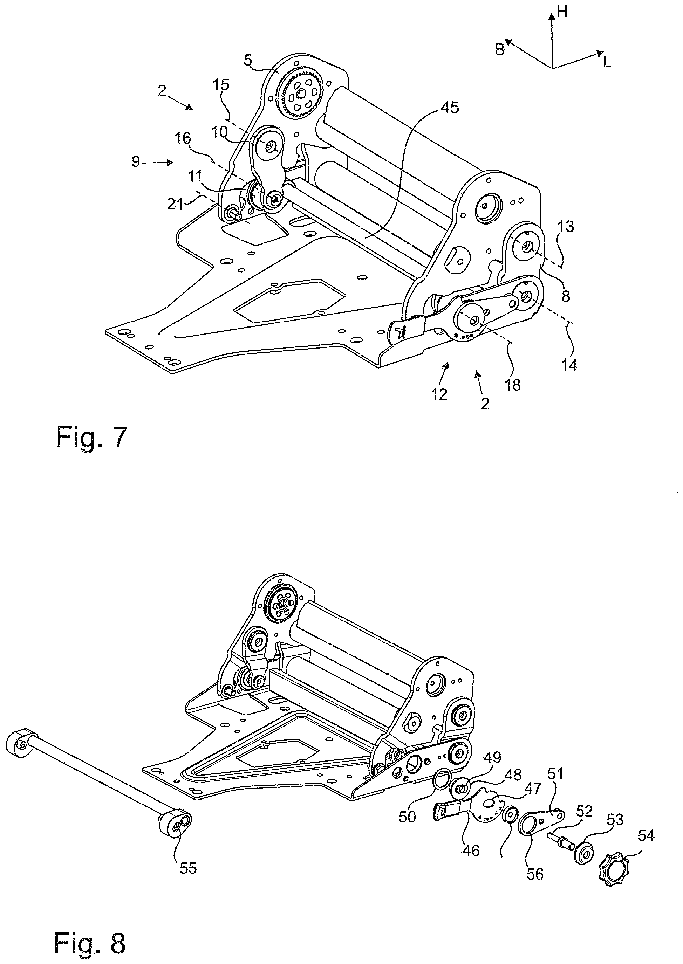

In der Figur 7 sind lediglich noch das Rückenlehnenbasisteil 5 sowie das Sitzbasisteil 7 und die Hebelanordnung 2 zu erkennen, so dass wesentliche Elemente besser zu erkennen sind.

Wie insbesonders erkennbar ist, sind in Längsrichtung L gesehen links und rechts an dem Rückenlehnenbasisteil 5 jeweils zwei Hebelanordnungen 2 erkennbar, wobei nur an einer Hebelanordnung 2 die Einstelleinrichtung 12 angeordnet ist.

Um die Bewegung der Einstelleinrichtung 12 und der Bewegung des zweiten Hebelelementteils auch auf die zweite Hebelanordnung 2 übertragen zu können, sind die zweiten Hebelelementteile 11 mittels eines sich in der Breitenrichtung B erstreckenden Verbindungselement 45 verbunden, wobei bevorzugt das Verbindungselement 45 mit den zweiten Hebelelementteilen 11 starr verbunden ist, beispielsweise verschweißt ist.

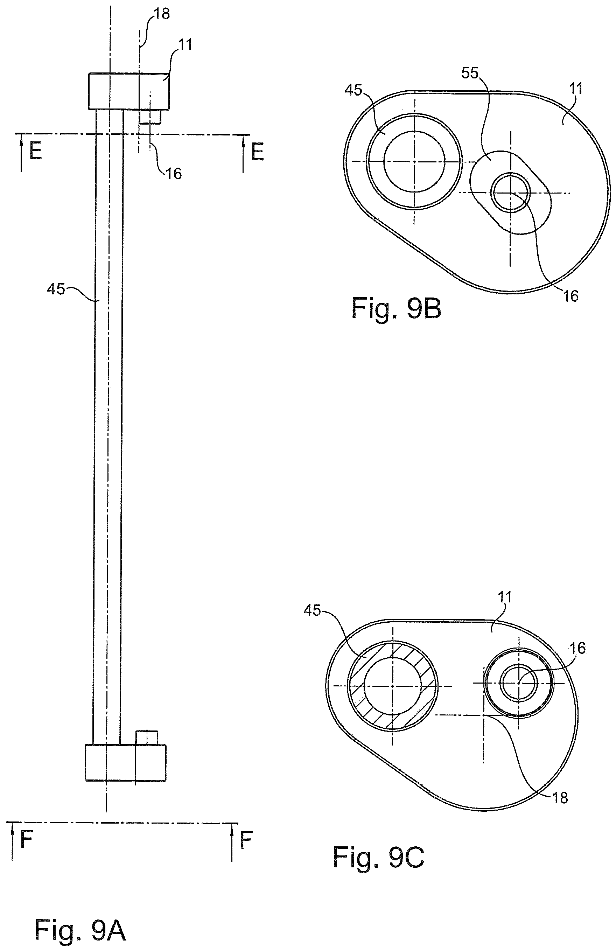

In der Figur 8 ist eine Explosionsdarstellung der Einstelleinrichtung 12 gezeigt, so dass deren Funktion und Aufbau mit den weiteren Figuren 9A, 9B und 9C näher beschrieben werden kann.

Die Einstelleinrichtung 12 umfasst dabei vorzugsweise ein Hebelelement 46 mit einem Langloch 47. Weiter ist ein Zwischenelement 48 vorgesehen, welches zwischen dem Sitzbasisteil 7 und dem Hebelelement 46 angeordnet ist und einen Bereich 49 aufweist, der komplementär zu dem Langloch 47 ausgebildet und mit diesem verbindbar ist. Weiter weist dieses Zwischenelement auf der gegenüberliegenden Seite des Bereichs 49 einen weiteren Bereich auf, der ebenso komplementär zu einem weiteren Langloch 55 ist und mit diesem verbindbar ist. Die Langlöcher 47, 55 weisen jeweils eine Erstreckungsrichtung auf, wobei die Erstreckungsrichtungen einen Winkel einschließen.

Weiter bevorzugt ist zwischen dem Sitzbasisteil 7 und dem Zwischenelement 49 ein Beilagscheibenelement 50 angeordnet.

Darüber hinaus ist vorzugsweise ein Halteelement 51 mit einer Öffnung 56 vorgesehen, wobei das Halteelement 51 mittels eines weiteren Zwischenelements 57 von dem Hebelelement 46 beabstandet ist.

Noch weiter bevorzugt ist ein Bolzenelement 52 vorgesehen, auf welches ein Druckelement 53 und ein Drehelement 54 aufsteckbar ist. Das Bolzenelement 53 erstreckt sich dabei bis zu dem weiteren Langloch 55 und ist mit diesem drehbar verbunden, beispielsweise durch ein Gewinde.

Durch Drehung des Drehelements 54 wird das Bolzenelement in das Gewinde des Langlochs 55 eingedreht, so dass durch das Druckelement 53 ein Druck auf das Halteelement 51 aufgebaut wird, so dass ebenso das Hebelelement 46 einen Druck erfährt. Durch dieses Zusammendrücken ist eine kraftschlüssige Arretierung möglich.

Die Öffnung 56 ist dabei kleiner als ein Durchmesser des Druckelements 53.

In der Figur 9A ist dabei nochmals das zweite Hebelelementteil 11 und das weitere zweite Hebelelementteil 11 dargestellt, welche durch das Verbindungselement 45 miteinander starr verbunden sind.

Dabei sind die vierte Drehachse 16 und die sechste Drehachse 18 zu erkennen. Insbesondere weisen die vierte Drehachse 16 und die sechste Drehachse 18 einen Abstand größer Null zueinander auf.

In der Figur 9B ist der Schnitt F-F zu erkennen, so dass das weitere Langloch 55 mit der vierten Drehachse 16 zu erkennen ist.

In der Figur 9C ist der Schnitt E-E zu erkennen, wodurch nochmals klar dargestellt wird, wie die vierte Drehachse 16 und die sechste Drehachse 18 in Relation zueinander stehen. Nochmals zusammengefasst können entsprechend der vorliegenden Erfindung jegliche Ausführungsformen miteinander kombiniert und ergänzt werden, soweit der durch die Ansprüche definierte Schutzbereich nicht verlassen wird. Gleiche Bauteile werden mit denselben Bezugszeichen versehen, wobei zur besseren Übersicht die Bezugszeichen weggelassen werden können.

Sämtliche in den Anmeldungsunterlagen offenbarten Merkmale werden als erfindungswesentlich beansprucht, sofern sie einzeln oder in Kombination gegenüber dem Stand der Technik neu sind und soweit der durch die Ansprüche definierte Schutzbereich nicht verlassen wird.

### Bezugszeichenliste

- 1: Nutzfahrzeug
- 2: Hebelanordnung
- 3: Fahrzeugsitz
- 4: Rückenlehnenteil
- 5: Rückenlehnenbasisteil
- 6: Sitzteil
- 7: Sitzbasisteil
- 8: erstes Hebelelement
- 9: zweites Hebelelement
- 10: erstes Hebelelementteil
- 11: zweites Hebelelementteil
- 12: Einstelleinrichtung
- 13: erste Drehachse
- 14: zweite Drehachse
- 15: dritte Drehachse
- 16: vierte Drehachse
- 17: fünfte Drehachse
- 18: sechste Drehachse
- 19: siebte Drehachse
- 20: achte Drehachse
- 21: neunte Drehachse
- 22: erste Verbindungslinie
- 23: zweite Verbindungslinie
- 24: dritte Verbindungslinie
- 25: drittes Hebelelementteil
- 26: erster Abstand
- 27: zweiter Abstand
- 28: erster Winkel
- 29: zweiter Winkel
- 30: dritter Winkel
- 31: vierter Winkel
- 32: fünfter Winkel
- 33: dritter Abstand
- 34: fiktive Rotationsachse
- 35: dritter Abstand
- 36: vierter Abstand
- 37: fünfter Abstand
- 38: sechster Abstand
- 39: siebter Abstand
- 40: vorderer Bereich
- 41: hinterer Bereich
- 42: vierte Verbindungslinie
- 43: zehnte Drehachse
- 44: Dreheinrichtung
- 45: Verbindungselement
- 46: Hebelelement
- 47: Langloch
- 48: Zwischenelement
- 49: Bereich
- 50: Beilagscheibenelement
- 51: Halteelement
- 52: Bolzenelement
- 53: Druckelement
- 54: Drehelement
- 55: weiteres Langloch
- 56: Öffnung
- 57: weiteres Zwischenelement
- P1: erste Position
- P2: zweite Position
- P3: dritte Position
- N: neutrale Stellung
- NV: nach vorne verlagerte Stellung
- NH: nach hinten verlagerte Stellung
- L: Fahrzeugsitzlängsrichtung
- B: Fahrzeugsitzbreitenrichtung
- H: Fahrzeugsitzhöhenrichtung

## Patentansprüche

1. Fahrzeugsitz (3) mit einem Rückenlehnenteil (4) und einem Rückenlehnenbasisteil (5), einem Sitzteil (6) und einem Sitzbasisteil (7), wobei das Sitzteil (6) gegenüber dem Sitzbasisteil (7) verlagerbar ist und wobei das Rückenlehnenteil (4) drehbar mit dem Rückenlehnenbasisteil (5) verbunden sind,
wobei
das Rückenlehnenbasisteil (5) und das Sitzbasisteil (7) mittels einer Hebelanordnung (2) miteinander verbunden sind,
wobei die Hebelanordnung (2) ein erstes Hebelelement (8) aufweist, welches mit dem Rückenlehnenbasisteil (5) und dem Sitzbasisteil (7) drehbar verbunden ist,
und ein zweites Hebelelement (9) aufweist, welches ein erstes Hebelelementteil (10) und ein zweites Hebelelementteil (11) umfasst, wobei
das erste Hebelelementteil (10) mit dem Rückenlehnenbasisteil (5) und dem zweiten Hebelelementteil (11) drehbar verbunden ist und das zweite Hebelelementteil (11) mit dem ersten Hebelelementteil (10) und einer Einstelleinrichtung (12) drehbar verbunden ist, wobei die Einstelleinrichtung (12) drehbar mit dem Sitzbasisteil (7) verbunden ist.

2. Fahrzeugsitz (3) nach Anspruch 1,
**dadurch gekennzeichnet, dass**
das erste Hebelelement (8) drehbar um eine erste Drehachse (13) mit dem Rückenlehnenbasisteil (5) und drehbar um eine zweite Drehachse (14) mit dem Sitzbasisteil (7) verbunden ist, und wobei das erste Hebelelementteil (10) drehbar um eine dritte Drehachse (15) mit dem Rückenlehnenbasisteil (5) und drehbar um eine vierte Drehachse (16) mit dem zweiten Hebelelementteil (11) verbunden ist,
und wobei das zweite Hebelelementteil (11) drehbar um eine fünfte Drehachse (17) mit der Einstelleinrichtung (12) verbunden ist, wobei die Einstelleinrichtung (12) drehbar um eine sechste Drehachse (18) mit dem Sitzbasisteil (7) verbunden ist.

3. Fahrzeugsitz (3) nach Anspruch 2,
**dadurch gekennzeichnet, dass**
die sechste Drehachse (18) ortsfest gegenüber dem Sitzbasisteil (7) angeordnet ist, und wobei die zweite Drehachse (14) ortsfest gegenüber dem Sitzbasisteil (7) angeordnet ist, und wobei die erste Drehachse (13) ortsfest gegenüber dem Rückenlehnenbasisteil (5) angeordnet ist, und wobei die dritte Drehachse (15) ortsfest gegenüber dem Rückenlehnenbasisteil (5) angeordnet ist.

4. Fahrzeugsitz (3) nach Anspruch 2 oder 3,
**dadurch gekennzeichnet, dass**
eine erste Verbindungslinie (22) zwischen der ersten Drehachse (13) zu der zweiten Drehachse (14), eine zweite Verbindungslinie (23) zwischen der dritten Drehachse (15) zu der vierten Drehachse (16) und eine dritte Verbindungslinie (23) zwischen der vierten Drehachse (16) und der sechsten Drehachse (18) ausgebildet sind.

5. Fahrzeugsitz (3) nach einem der Ansprüche 1 bis 4,
**dadurch gekennzeichnet, dass**
das Sitzteil (6) einerseits mit dem Rückenlehnenbasisteil (5) drehbar verbunden ist, wobei andererseits ein drittes Hebelelementteil (25) vorgesehen ist, welches mit dem Sitzteil (6) und dem Sitzbasisteil (7) drehbar verbunden ist.

6. Fahrzeugsitz (3) nach Anspruch 2, 3 oder 4,
**dadurch gekennzeichnet, dass**
ein erster Abstand (26) der ersten Drehachse (13) zu der zweiten Drehachse (14) gleich einem zweiten Abstand (27) der dritten Drehachse (15) zu der vierten Drehachse (16) entspricht.

7. Fahrzeugsitz (3) nach Anspruch 4,
**dadurch gekennzeichnet, dass**
mittels der Einstelleinrichtung (12) eine erste Position (P1), eine zweite Position (P2) und eine dritte Position (P3) des zweiten Hebelelementteils (11) einstellbar sind, wobei in der ersten Position (P1) die erste Verbindungslinie (22) parallel zu der zweiten Verbindungslinie (23) ist, und in der zweiten Position (P2) die erste Verbindungslinie (22) und die zweite Verbindungslinie (23) einen ersten Winkel (28) einschließen, und in der dritten Position (P3) die erste Verbindungslinie (22) und die zweite Verbindungslinie (23) einen zweiten Winkel (29) einschließen.

8. Fahrzeugsitz (3) nach Anspruch 4,
**dadurch gekennzeichnet, dass**
die zweite Verbindungslinie (23) und die dritte Verbindungslinie (24) in der ersten Position (P1) einen dritten Winkel (30) einschließen, in der zweiten Position (P2) einen vierten Winkel (31) einschließen und in der dritten Position (P3) einen fünften Winkel (32) einschließen.

9. Fahrzeugsitz (3) nach einem der Ansprüche 2 bis 8,
**dadurch gekennzeichnet, dass**
mittels der Einstelleinrichtung (12) ein dritter Abstand (33) der dritten Drehachse (15) zu der fünften Drehachse (17) veränderbar ist, so dass eine Position einer fiktiven Rotationsachse (34) veränderbar ist.

10. Fahrzeugsitz (34) nach einem der Ansprüche 1 bis 9,
**dadurch gekennzeichnet, dass**
bei einer Bewegung des Rückenlehnenbasisteils (5) gegenüber dem Sitzbasisteil (7) mittels der Hebelanordnung (2) eine Sitzteilneigung des Sitzteils (6) und eine Längsposition relativ zu dem Sitzbasisteil (7) einstellbar ist.

## Claims

1. Vehicle seat (3) having a backrest part (4) and a backrest base part (5), a seat part (6) and a seat base part (7), wherein the seat part (6) is displaceable with respect to the seat base part (7) and wherein the backrest part (4) is rotatably connected to the backrest base part (5),
wherein
the backrest base part (5) and the seat base part (7) are connected to one another by means of a lever assembly (2),
wherein the lever assembly (2) comprises a first lever element (8), which is rotatably connected to the backrest base part (5) and the seat base part (7),
and a second lever element (9), which comprises a first lever element part (10) and a second lever element part (11), wherein
the first lever element part (10) is rotatably connected to the backrest base part (5) and the second lever element part (11), wherein the second lever element part (11) is rotatably connected to the first lever element part (10) and an adjustment device (12), wherein the adjustment device (12) is rotatably connected to the seat base part (7).

2. Vehicle seat (3) according to claim 1,
**characterised in that**
the first lever element (8) is rotatably connected to the backrest base part (5) about a first axis of rotation (13) and rotatably connected to the seat base part (7) about a second axis of rotation (14), and wherein the first lever element part (10) is rotatably connected to the backrest base part (5) about a third axis of rotation (15) and rotatably connected to the second lever element part (11) about a fourth axis of rotation (16),
and wherein the second lever element part (11) is rotatably connected to the adjustment device (12) about a fifth axis of rotation (17), wherein the adjustment device (12) is rotatably connected to the seat base part (7) about a sixth axis of rotation (18).

3. Vehicle seat (3) according to claim 2,
**characterised in that**
the sixth axis of rotation (18) is fixedly arranged with respect to the seat base part (7), wherein the second axis of rotation (14) is fixedly arranged with respect to the seat base part (7), wherein the first axis of rotation (13) is fixedly arranged with respect to the backrest base part (5), and wherein the third axis of rotation (15) is fixedly arranged with respect to the backrest base part (5).

4. Vehicle seat (3) according to either claim 2 or claim 3,
**characterised in that**
a first connecting line (22) between the first axis of rotation (13) to the second axis of rotation (14), a second connecting line (23) between the third axis of rotation (15) to the fourth axis of rotation (16) and a third connecting line (23) between the fourth axis of rotation (16) and the sixth axis of rotation (18) are formed.

5. Vehicle seat (3) according to any of claims 1 to 4,
**characterised in that**
the seat part (6) is rotatably connected on the one hand to the backrest base part (5), a third lever element part (25) being provided on the other hand, which is rotatably connected to the seat part (6) and the seat base part (7).

6. Vehicle seat (3) according to claim 2, 3 or 4,
**characterised in that**
a first distance (26) between the first axis of rotation (13) and the second axis of rotation (14) corresponds to a second distance (27) between the third axis of rotation (15) and the fourth axis of rotation (16).

7. Vehicle seat (3) according to claim 4,
**characterised in that**
a first position (P1), a second position (P2) and a third position (P3) of the second lever element part (11) can be adjusted by means of the adjustment device (12), wherein in the first position (P1) the first connecting line (22) is parallel to the second connecting line (23), and in the second position (P2) the first connecting line (22) and the second connecting line (23) enclose a first angle (28), and in the third position (P3) the first connecting line (22) and the second connecting line (23) enclose a second angle (29).

8. Vehicle seat (3) according to claim 4,
**characterised in that**
the second connecting line (23) and the third connecting line (24) enclose a third angle (30) in the first position (P1), a fourth angle (31) in the second position (P2) and a fifth angle (32) in the third position (P3).

9. Vehicle seat (3) according to any of claims 2 to 8,
**characterised in that**
a third distance (33) between the third axis of rotation (15) and the fifth axis of rotation (17) can be changed by means of the adjustment device (12) so that a position of a fictitious axis of rotation (34) can be changed.

10. Vehicle seat (3) according to any of claims 1 to 9,
**characterised in that**
when the backrest base part (5) moves with respect to the seat base part (7) by means of the lever assembly (2), a seat part inclination of the seat part (6) and a longitudinal position relative to the seat base part (7) can be adjusted.

## Revendications

1. Siège de véhicule (3) comportant une partie dossier (4) et une partie base de dossier (5), une partie siège (6) et une partie base de siège (7), dans lequel la partie siège (6) est déplaçable par rapport à la partie base de siège (7) et dans lequel la partie dossier (4) est reliée de manière rotative à la partie base de dossier (5),
dans lequel la partie base de dossier (5) et la partie base de siège (7) sont reliées l'une à l'autre au moyen d'un ensemble de levier (2),
dans lequel l'ensemble de levier (2) présente un premier élément levier (8), lequel est relié de manière rotative à la partie base de dossier (5) et à la partie base de siège (7), et présente un second élément levier (9), lequel comporte une première partie d'élément levier (10) et une deuxième partie d'élément levier (11),
dans lequel la première partie d'élément levier (10) est reliée de manière rotative à la partie base de dossier (5) et à la seconde partie d'élément levier (11), et la deuxième partie d'élement levier (11) est reliée de manière rotative à la première partie d'élément levier (10) et à un dispositif de réglage (12), le dispositif de réglage (12) étant relié de manière rotative à la partie base de siège (7).

2. Siège de véhicule (3) selon la revendication 1,
**caractérisé par le fait que**
le premier élément levier (8) est relié de manière rotative autour d'un premier axe de rotation (13) à la partie base de dossier (5) et de manière rotative autour d'un deuxième axe de rotation (14) à la partie base de siège (7), et dans lequel la première partie d'élément levier (10) est reliée de manière rotative autour d'un troisième axe de rotation (15) à la partie base de dossier (5) et de manière rotative autour d'un quatrième axe de rotation (16) à la deuxième partie d'élément levier (11), et dans lequel la deuxième partie d'élément levier (11) est reliée de manière rotative autour d'un cinquième axe de rotation (17) au dispositif de réglage (12), le dispositif de réglage (12) étant relié de manière rotative autour d'un sixième axe de rotation (18) à la partie base de siège (7).

3. Siège de véhicule (3) selon la revendication 2,
**caractérisé par le fait que**
le sixième axe de rotation (18) est disposé fixe par rapport à la partie base de siège (7), et dans lequel le deuxième axe de rotation (14) est disposé fixe par rapport à la partie base de siège (7), et dans lequel le premier axe de rotation (13) est disposé fixe par rapport à la partie base de dossier (5), et dans lequel le troisième axe de rotation (15) est disposé fixe par rapport à la partie base de dossier (5).

4. Siège de véhicule (3) selon l'une des revendications 2 ou 3,
**caractérisé par le fait qu'**
une première ligne de liaison (22) est formée entre le premier axe de rotation (13) et le deuxième axe de rotation (14), une deuxième ligne de liaison (23) est formée entre le troisième axe de rotation (15) et le quatrième axe de rotation (16), et une troisième ligne de liaison (23) est formée entre le quatrième axe de rotation (16) et le sixième axe de rotation (18).

5. Siège de véhicule (3) selon l'une des revendications 1 à 4,
**caractérisé par le fait que**
la partie siège (6) est, d'une part, reliée de manière rotative à la partie base de dossier (5), dans lequel, d'autre part, une troisième partie d'élément levier (25) est prévue, laquelle est reliée de manière rotative à la partie siège (6) et à la partie base de siège (7).

6. Siège de véhicule (3) selon l'une des revendications 2, 3 ou 4,
**caractérisé par le fait qu'**
une première distance (26) du premier axe de rotation (13) par rapport au deuxième axe de rotation (14) est égale à une seconde distance (27) du troisième axe de rotation (15) par rapport au quatrième axe de rotation (16).

7. Siège de véhicule (3) selon la revendication 4,
**caractérisé par le fait qu'**
une première position (P1), une deuxième position (P2) et une troisième position (P3) de la deuxième partie d'élément levier (11) sont réglables au moyen du dispositif de réglage (12), dans lequel, dans la première position (P1), la première ligne de liaison (22) est parallèle à la deuxième ligne de liaison (23) et, dans la deuxième position (P2), la première ligne de liaison (22) et la deuxième ligne de liaison (23) forment un premier angle (28), et, dans la troisième position (P3), la première ligne de liaison (22) et la deuxième ligne de liaison (23) forment un deuxième angle (29).

8. Siège de véhicule (3) selon la revendication 4,
**caractérisé par le fait que**
la deuxième ligne de liaison (23) et la troisième ligne de liaison (24) forment un troisième angle (30) dans la première position (P1), forment un quatrième angle (31) dans la deuxième position (P2) et forment un cinquième angle (32) dans la troisième position (P3).

9. Siège de véhicule (3) selon l'une des revendications 2 à 8,
**caractérisé par le fait qu'**
une troisième distance (33) du troisième axe de rotation (15) au cinquième axe de rotation (17) est modifiable au moyen du dispositif de réglage (12), de telle sorte qu'une position d'un axe de rotation fictif (34) est modifiable.

10. Siège de véhicule (34) selon l'une des revendications 1 à 9,
**caractérisé par le fait que**,
lors d'un déplacement de la partie base de dossier (5) par rapport à la partie base de siège (7), au moyen de l'ensemble levier (2), une inclinaison de la partie siège (6) et une position longitudinale par rapport à la partie base de siège (7) sont réglables.
